# EUROPÄISCHE PATENTANMELDUNG

(11) **EP 1 655 174 A2**
(43) Veröffentlichungstag der Anmeldung: **10.05.2006**
(21) Anmeldenummer: 05023770.0
(22) Anmeldetag: 31.10.2005
(51) Int. Cl.: B60Q 1/26

(54) **Fahrzeugleuchtenanordnung**

(30) Priorität: 03.11.2004 DE 102004053643
(71) Anmelder: Patent-Treuhand-Gesellschaft für elektrische Glühlampen mbH, 81543 München (DE)
(72) Erfinder: Scholz, Bernd-Heiner, 61381 Friedrichsdorf (DE)
(74) Vertreter: Raiser, Franz

(57) **Zusammenfassung**

Offenbart ist eine Fahrzeugleuchtenanordnung (1) mit zumindest einer Lichtquelle (16) und einer lichtdurchlässigen, eine Abstrahlfläche (6) ausbildenden Abdeckung (8), wobei die Leuchtenanordnung (1) in einer Aufnahme des Fahrzeugs (10) befestigt ist. Erfindungsgemäß ist die Aufnahme eine Einprägung (10), in die die Leuchtenanordnung (1) eingesetzt ist und bündig mit einer Außenkontur (14) des Fahrzeugs abschließt.

## Beschreibung

### Technisches Gebiet

Die Erfindung betrifft eine Fahrzeugleuchtenanordnung gemäß dem Oberbegriff des Patentanspruchs 1 und eine Leuchte für eine Fahrzeugleuchtenanordnung nach dem Oberbegriff des Patentanspruchs 12.

### Stand der Technik

Derartige Leuchtenanordnungen finden beispielsweise im Bereich der Fahrzeugtechnik für Rücklichter, Bremsleuchten, Blinkleuchten und dergleichen Verwendung. Vielfach werden bereits vormontierte, mit einem zusätzlichen Innengehäuse zum Schutz der Leuchtenanordnung und des Fahrzeuginneren vor Umwelteinflüssen versehene Lampenmodule in Einbauöffnungen der Karosserie eingesetzt. In zunehmendem Maße werden Leuchtdioden (LED's) anstelle von herkömmlichen Glühlampen in solchen Lampenmodulen eingesetzt, da diese eine längere Lebensdauer, einen besseren Wirkungsgrad und einen geringeren Platzbedarf aufweisen. Bedingt durch die geringere Leuchtdichte einer einzelnen Leuchtdiode im Vergleich zu einer konventionellen Glühlampe werden meist mehrere, auf einer Leiterplatte angeordnete, Leuchtdioden als Leuchtdiodenanordnung verwendet.

Eine derartige Fahrzeugleuchte mit Leuchtdiodenanordnung ist beispielsweise aus der DE 103 04 832 A1 bekannt. Diese Fahrzeugleuchte verwendet einen, an die Kontur einer Lichtscheibe angepassten stufenförmigen Träger zur Aufnahme der Leuchtdioden, wobei diese an einem der Lichtscheibe benachbarten Rand des Trägers angeordnet sind und im Wesentlichen der Kontur der Lichtscheibe folgen. Nachteilig bei derartigen Fahrzeugleuchten ist zum einen, dass aufgrund der benötigten Einbauöffnungen die Steifigkeit der Karosserie im Bereich der Leuchten verringert wird und zum anderen ein zusätzliches Innengehäuse und damit ein erhöhter Montageaufwand notwendig ist, um die Lampenmodule und das Fahrzeuginnere vor Umwelteinflüssen, insbesondere vor Verschmutzung und eindringender Feuchtigkeit, zu schützen.

### Darstellung der Erfindung

Der Erfindung liegt die Aufgabe zugrunde, eine Fahrzeugleuchtenanordnung mit einer Leuchte zu schaffen, die gegenüber herkömmlichen Lösungen einen vereinfachten Aufbau hat und eine verbesserte Steifigkeit der Karosserie ermöglicht.

Diese Aufgabe wird hinsichtlich der Fahrzeugleuchtenanordnung durch die Merkmalskombination des Anspruchs 1 und hinsichtlich der Leuchte durch die Merkmale des Anspruchs 12 gelöst. Besonders vorteilhafte Ausführungen der Erfindung sind in den abhängigen Ansprüchen beschrieben.

Die erfindungsgemäße Fahrzeugleuchtenanordnung weist eine Lichtquelle und eine lichtdurchlässige, eine Abstrahlfläche ausbildende Abdeckung auf und ist in einer Aufnahme des Fahrzeugs befestigt. Erfindungsgemäß ist die Aufnahme als Einprägung ausgebildet, in die die Leuchte eingesetzt ist und bündig mit einer Außenkontur des Fahrzeugs abschließt. Eine Einbauöffnung für die Beleuchtungsaufnahme mit der damit verbundenen, in diesem Bereich verringerten Steifigkeit der Karosserie, wird gegenüber dem Stand der Technik nicht benötigt. Weiterhin ist kein zusätzliches Innengehäuse notwendig, da die Leuchtenanordnung und das Fahrzeuginnere von der Einprägung abgeschlossen und vor Umwelteinflüssen, insbesondere vor Verschmutzung und eindringender Feuchtigkeit geschützt sind. Die Einprägung kann mittels aus dem allgemeinen Stand der Technik bekannten Umformverfahren, bspw. durch einen Pressprozess, in die Karosserie eingebracht werden.

Die bei der erfindungsgemäßen Fahrzeuglampenanordnung verwendbare Leuchte gemäß dem nebengeordneten Anspruch 12 hat eine Leiterplatte, die entsprechend der Wölbung einer Bodenfläche der Einprägung elastisch verformbar ist. Aufgrund der Anordnung der Lichtquelle auf der elastischen Leiterplatte, kann auf eine Anpassung an die Geometrie der Bodenfläche der Einprägung verzichtet werden. Gegenüber dem Stand der Technik, sind dadurch Designänderungen am Fahrzeug ohne Änderungen an der Leuchtengestaltung und mit verringertem Fertigungsaufwand möglich.

Als Lichtquelle findet vorzugsweise zumindest eine Leuchtdiode (LED) und besonders vorteilhaft eine auf einer Leiterplatte angeordnete Leuchtdiodenanordnung in der Fahrzeugleuchtenanordnung Verwendung.

Als besonders vorteilhaft hat es sich erwiesen, die Leiterplatte mit der Bodenfläche der Einprägung flächig zu verbinden, vorzugsweise zu verkleben. Durch die Verbindung der Leiterplatte mit der Bodenfläche wird eine sichere Montage der Leiterplatte und eine geringe Bauhöhe der Fahrzeugleuchtenanordnung in der Einprägung ermöglicht.

Die Leiterplatte weist vorzugsweise einen Steckverbinder auf, mittels dem sie elektrisch kontaktierbar ist.

Vorzugsweise ragt der Steckverbinder in eine Montageausnehmung der Einprägung hinein und weist zumindest eine Haltevorrichtung, insbesondere eine Rastnase auf, über die er in der Montageausnehmung gehalten wird.

Bei einer bevorzugten Ausführungsform der Erfindung ist die lichtdurchlässige Abdeckung entsprechend der Außenkontur des Fahrzeugs gewölbt oder elastisch verformbar. Beispielsweise kann die Abdeckung durch ihre elastische Gestaltung an die Außenkontur der Fahrzeugkarosserie angepasst werden, d.h. die erfindungsgemäße Fahrzeugleuchtenanordnung kann bei ähnlichen Fahrzeugtypen und -modellen eingesetzt werden, wobei sich der Fertigungsaufwand weiter verringert. Die Formgebung ist vereinfacht, da kein hochkomplexes 3D-Bauteil mit hohen Werkzeugkosten bspw. beim Spritzgießen benötigt wird, sondern verhältnismäßig einfache und damit die Werkzeugkosten senkende Formen Verwendung finden.

Die Abdeckung weist vorzugsweise eine lichtlenkende optische Struktur auf. Diese Struktur hat beispielsweise eine bündelnde oder streuende Optik mit Linsen- oder Prismensystemen und ermöglicht es, das von der Lichtquelle erzeugte Licht je nach Anwendungsfall in der erforderlichen Weise zu lenken.

Die lichtlenkende optische Struktur hat vorteilhafterweise sägezahnartige Vorsprünge, die jeweils einer Leuchtdiode zugeordnet sind und diese zumindest abschnittsweise überdecken.

Als vorteilhaft hat es sich erwiesen, wenn die lichtlenkende optische Struktur zumindest eine konkave Lichteintrittsfläche aufweist.

Vorzugsweise wird die Abdeckung über eine Verbindungsmasse, insbesondere

Silikon, mit der Einprägung verbunden.

### Kurze Beschreibung der Zeichnungen

Nachstehend wird die Erfindung anhand eines bevorzugten Ausführungsbeispiels näher erläutert. Es zeigt:

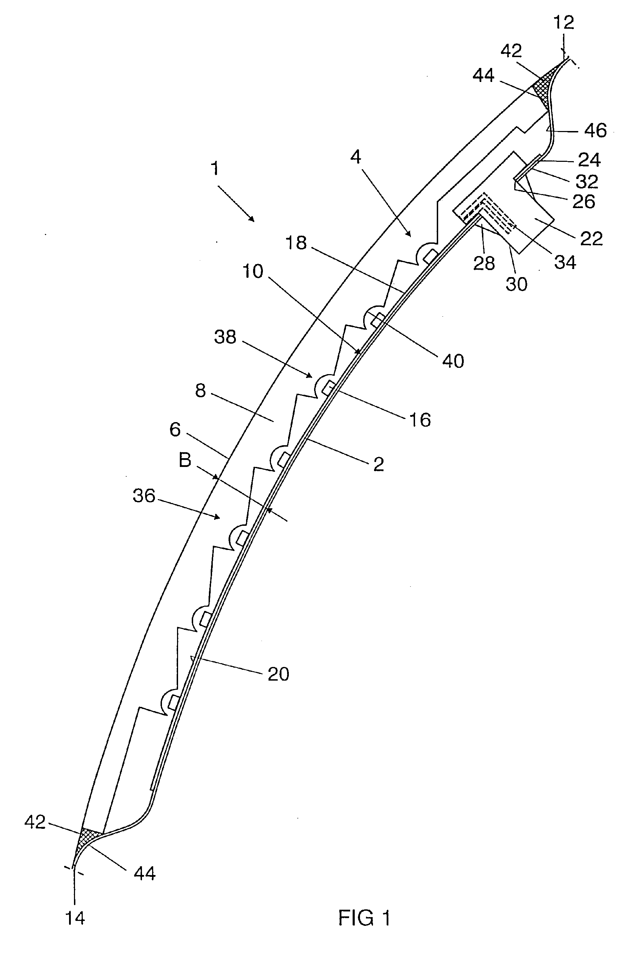

Figur 1 einen Querschnitt einer erfindungsgemäßen in ein Fahrzeug eingesetzten Fahrzeugleuchtenanordnung.

### Bevorzugte Ausführung der Erfindung

Figur 1 zeigt eine Fahrzeugleuchtenanordnung 1, mit einer auf einer Leiterplatte 2 angeordneten Leuchtdiodenanordnung 4 und einer lichtdurchlässigen, eine Abstrahlfläche 6 ausbildenden Abdeckung 8.

Erfindungsgemäß ist die Fahrzeugleuchtenanordnung 1 in einer Einprägung 10 einer Fahrzeugkarosserie 12 befestigt und schließt bündig mit einer Außenkontur 14 des Fahrzeugs ab. Unter Einprägung 10 wird bevorzugt eine Vertiefung der Fahrzeugkarosserie 12 verstanden, deren Längsausdehnung ein Vielfaches vom Wert der Tiefe, insbesondere zumindest das Fünffache der Tiefe beträgt. Eine Einbauöffnung für die Beleuchtungsaufnahme, mit der damit in diesem Bereich verringerten Steifigkeit der Karosserie 12, wird gegenüber dem Stand der Technik aufgrund der Einprägung 10 nicht benötigt. Da die Leuchtenanordnung 1 und das Fahrzeuginnere von der Einprägung 10 abgeschlossen und vor Umwelteinflüssen, insbesondere vor Verschmutzung und eindringender Feuchtigkeit geschützt sind, kann auf ein zusätzliches Innengehäuse verzichtet und der Fertigungsaufwand erheblich verringert werden. Die in der Fahrzeugleuchtenanordnung 1 verwendete Leuchtdiodenanordnung 4 (LED-Array) wird von einer oder mehreren Leuchtdioden 16 gebildet, die matrixartig auf einer Oberfläche 18 der Leiterplatte 2 angeordnet sind. Je nach Anwendungsfall und gewünschter Leuchtwirkung, sind unterschiedliche Anordnungen der Leuchtdioden 16 möglich. Beispielsweise können diese in einer oder mehreren Reihen nebeneinander, flächig oder partiell angeordnet sein.

Gegenüber dem Stand der Technik ist die Leiterplatte 2 nicht unflexibel sondern elastisch ausgebildet, wobei die auf der Leiterplatte 2 befestigten Bauteile, derart angeordnet sind, dass sie diese Elastizität ermöglichen. Die Leiterplatte 2 ist entsprechend der Wölbung einer Bodenfläche 20 der Einprägung 10 elastisch verformt und flächig mit dieser verklebt. Die Bodenfläche 20 der Einprägung 10 verläuft mit einem Abstand B, zumindest abschnittsweise, parallel zu der Abstrahlfläche 6 und der Außenkontur 14 der Fahrzeugkarosserie 12. Durch die flächige Verklebung der Leiterplatte 2 mit der Bodenfläche 20 wird zum einen eine sichere Montage der Leiterplatte 2 und eine geringe Bauhöhe der Leuchtenanordnung 1 in der Einprägung 10 erreicht, und andererseits der Fertigungsaufwand erheblich verringert, da aufgrund der Anordnung der Leuchtdioden 16 auf der elastischen Leiterplatte 2 auf eine ins Detail gehende 3D-Anpassung an die Geometrie der Bodenfläche 20 der Einprägung 10 verzichtet werden kann. Designänderungen an der Fahrzeugkarosserie 12 sind gegenüber dem Stand der Technik ohne Änderungen an der Leiterplatte 2 und mit wesentlich verringertem Fertigungsaufwand möglich, da keine unflexiblen, an die Kontur der Abstrahlfläche angepassten Trägerplatten, Verwendung finden.

Die Leiterplatte 2 der Fahrzeugleuchtenanordnung 1 und damit die darauf montierten Leuchtdioden 16 werden über einen Steckverbinder 22 elektrisch kontaktiert. Dieser weist einen etwa T-förmigen Querschnitt auf und ist über eine Ringfläche 24 mit der Oberfläche 18 der Leiterplatte 2 in Anlage gebracht, durchdringt diese und ragt in eine Montageausnehmung 26 der Einprägung 10 hinein. Gegenüber der im Stand der Technik notwendigen großflächigen Einbauöffnung, ist erfindungsgemäß nur eine verhältnismäßig kleine Montageausnehmung zur Aufnahme des Steckverbinders 22 erforderlich. Über Rastnasen 28 wird der Steckverbinder 22 in der Montageausnehmung 26 gehalten und sichert zusätzlich die Leiterplatte 2 in der Einprägung 10. Hierzu sind die Rastnasen 28 diametral an einer Umfangsfläche 30 des Steckers 22 angeordnet und weisen einen etwa keilförmigen Querschnitt auf, der im eingesetzten Zustand des Steckers 22 eine Wandung 32 der Einprägung 10 hintergreift. Zur elektrischen Kontaktierung ist der Steckverbinder 22 mit gestrichelt angedeuteten Kontaktstiften 34 versehen.

Die lichtdurchlässige Abdeckung 8 der Fahrzeuglampenanordnung 1 ist entsprechend der Außenkontur 14 der Fahrzeugkarosserie 12 gewölbt und schließt bündig mit dieser ab. Die Abdeckung weist eine lichtlenkende optische Struktur 36 mit sägezahnartigen Vorsprüngen 38 auf, die jeweils einer der Leuchtdioden 16 zugeordnet sind und diese abschnittsweise mit einer konkaven Lichteintrittsfläche 40 überdecken, so dass die Abdeckung 8 im Bereich jeder Leuchtdiode 16 eine Art plan-konkaves Linsensystem ausbildet. Lichtaustrittsseitig weist die Abdeckung 8 der Fahrzeugleuchtenanordnung 1, die der Außenkontur 14 angepasste Abstrahlfläche 6 auf. Die Abdeckung 8 wird über eine Verbindungsmasse (Dichtmasse) 42, bspw. Silikon, an einer umlaufenden Stirnfläche 44 mit einer Umfangsfläche 46 der Einprägung 10 verbunden und dadurch in der Einprägung 10 gehalten. Durch die Verbindungsmasse 42 wird ein dichter, vor Umwelteinflüssen geschützter Abschluss der Fahrzeugleuchtenanordnung 1 erreicht.

Die Montage der Fahrzeugleuchtenanordnung 1 in der Fahrzeugkarosserie weist im Wesentlichen folgende Schritte auf: In einem ersten Arbeitsgang wird die Oberfläche 18 der Leiterplatte 2 mit Leuchtdioden 16 in Form einer Leuchtdiodenanordnung 4 bestückt und mit einem Steckverbinder 22 versehen. Diese vorgefertigte Einheit wird anschließend in die Einprägung 10 eingesetzt, entsprechend der Wölbung der Bodenfläche 20 der Einprägung 10 elastisch verformt und flächig mit dieser verklebt. Im folgenden Arbeitsschritt wird die Leiterplatte 2 über den Steckverbinder 22 elektrisch kontaktiert. Abschließend wird die lichtdurchlässige Abdeckung 8 in die Einprägung 10 bündig eingesetzt und über eine Verbindungsmasse 42 mit einer Umfangsfläche 46 der Einprägung 10 verbunden.

Die erfindungsgemäße Fahrzeugleuchtenanordnung 1 ist nicht auf die beschriebene Leuchtdiodenanordnung 4 beschränkt, vielmehr kann jede aus dem Stand der Technik bekannte Lichtquelle oder eine Kombination unterschiedlicher Lichtquellen Verwendung finden. Beispielsweise ist in einem Kraftfahrzeugscheinwerfer eine Kombination aus einer Glühlampe für das Ausleuchten der Fahrbahn und eine Leuchtdiodenanordnung 4 für die Blinkleuchten möglich.

Offenbart ist eine Fahrzeugleuchtenanordnung 1 mit zumindest einer Lichtquelle 16 und einer lichtdurchlässigen, eine Abstrahlfläche 6 ausbildenden Abdeckung 8, wobei die Leuchtenanordnung 1 in einer Aufnahme des Fahrzeugs befestigt ist. Erfindungsgemäß ist die Aufnahme eine Einprägung 10, in die die Leuchtenanordnung 1 eingesetzt ist und bündig mit einer Außenkontur 14 des Fahrzeugs abschließt.

## Patentansprüche

1. Fahrzeugleuchtenanordnung, mit zumindest einer Lichtquelle und einer lichtdurchlässigen, eine Abstrahlfläche (6) ausbildenden Abdeckung (8), wobei die Leuchtenanordnung (1) in einer Aufnahme des Fahrzeugs befestigt ist, **dadurch gekennzeichnet, dass** die Aufnahme eine Einprägung (10) ist, in die die Leuchtenanordnung (1) eingesetzt ist und bündig mit einer Außenkontur (14) des Fahrzeugs abschließt.

2. Fahrzeugleuchtenanordnung nach Anspruch 1, wobei die Lichtquelle zumindest eine Leuchtdiode (LED) (16), vorzugsweise eine auf einer Leiterplatte (2) angeordnete Leuchtdiodenanordnung (4) aufweist.

3. Fahrzeugleuchtenanordnung nach Anspruch 1 oder 2, wobei die Leiterplatte (2) entsprechend der Wölbung einer Bodenfläche (20) der Einprägung (10) elastisch verformbar ist.

4. Fahrzeugleuchtenanordnung nach Anspruch 3, wobei die Leiterplatte (2) mit der Bodenfläche (20) der Einprägung (10) flächig verbunden, vorzugsweise verklebt ist.

5. Fahrzeugleuchtenanordnung nach einem der Ansprüche 2 bis 4, wobei die Leiterplatte (2) einen Steckverbinder (22) aufweist und über diesen elektrisch kontaktierbar ist.

6. Fahrzeugleuchtenanordnung nach Anspruch 5, wobei der Steckverbinder (22) in eine Montageausnehmung (26) der Einprägung (10) hineinragt und zumindest eine Haltevorrichtung (28), insbesondere eine Rastnase, zur Halterung in der Montageausnehmung (26) aufweist.

7. Fahrzeugleuchtenanordnung nach einem der vorhergehenden Ansprüche, wobei die Abdeckung (8) entsprechend der Außenkontur (14) gewölbt oder elastisch verformbar ist.

8. Fahrzeugleuchtenanordnung nach einem der vorhergehenden Ansprüche, wobei die Abdeckung (8) eine lichtlenkende optische Struktur (36) aufweist.

9. Fahrzeugleuchtenanordnung nach Anspruch 8, wobei die lichtlenkende optische Struktur (36) sägezahnartige Vorsprünge (38) aufweist, die jeweils einer Leuchtdiode (16) zugeordnet sind und diese zumindest abschnittsweise überdecken.

10. Fahrzeugleuchtenanordnung nach Anspruch 8 oder 9, wobei die lichtlenkende optische Struktur (36) zumindest eine konkave Lichteintrittsfläche (40) aufweist.

11. Fahrzeugleuchtenanordnung nach einem der vorhergehenden Ansprüche, wobei die Abdeckung (8) über eine Verbindungsmasse (42), insbesondere Silikon, mit der Einprägung (10) verbunden wird.

12. Leuchte für eine Fahrzeugleuchtenanordnung, insbesondere nach einem der vorhergehenden Ansprüche 1 bis 11, mit einer flexiblen Leiterplatte (2), die derart ausgebildet ist, dass sie flexibel an eine Bodenfläche (20) einer Aufnahme (10) in der Fahrzeugkarosserie (12) anpassbar ist.
